(19) Europäisches Patentamt
European Patent Office
Office européen des brevets

(11) EP 4 803 887 A1

(12) **EUROPEAN PATENT APPLICATION**
published in accordance with Art. 153(4) EPC

(43) Date of publication:
**09.09.2026 Bulletin 2026/37**

(21) Application number: **24886032.2**

(22) Date of filing: **23.09.2024**

(51) International Patent Classification (IPC):
***G01N 21/84*** *(2006.01)* ***G01B 11/06*** *(2006.01)*
***G01N 21/41*** *(2006.01)*

(52) Cooperative Patent Classification (CPC):
**G01B 11/06; G01N 21/41; G01N 21/84**

(86) International application number:
**PCT/KR2024/014327**

(87) International publication number:
**WO 2025/095354 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.10.2023 KR 20230147535**

(71) Applicant: **Jung, Chang Soo**
**Yongin-si Gyeonggi-do 17058 (KR)**

(72) Inventor: **Jung, Chang Soo**
**Yongin-si Gyeonggi-do 17058 (KR)**

(74) Representative: **Bryn Aarflot AS**
**Patent**
**Stortingsgata 8**
**0161 Oslo (NO)**

# (54) OPTICAL THIN FILM ANALYSIS APPARATUS NOT AFFECTED BY BACKSIDE REFLECTION OF SUBSTRATE AND ANALYSIS METHOD BY SAME

(57) The disclosure relates to an optical thin film analysis apparatus not affected by substrate back surface reflection and an analysis method thereof, and more particularly, to an optical thin film analysis apparatus not affected by substrate back surface reflection and an analysis method thereof that simultaneously measure thickness and optical constants including refractive index and extinction coefficient of a thin film coated on the substrate with improved spatial resolution and measurement precision by solving the problem of the beam reflection at the substrate back surface.

[FIG. 6]

20
50
40
500
600
30
100
300
10
400
50R-3
50R-2
50R-1

EP 4 803 887 A1

## Description

### TECHNICAL FIELD

The disclosure relates to an optical thin film analysis apparatus not affected by substrate back surface reflection and an analysis method thereof, and more particularly, to an optical thin film analysis apparatus not affected by substrate back surface reflection and an analysis method thereof that simultaneously measure thickness and optical constants including refractive index and extinction coefficient of a thin film coated on the substrate with improved spatial resolution and measurement precision by solving the problem of the beam reflection at the substrate back surface.

### BACKGROUND ART

Since various research materials are prepared in the form of thin film on the substrate, the thickness measurement of the thin film samples is a very important task in material research. Methods for optically measuring the thickness of thin film samples are known to be very useful because they use non-contact/non-destructive methods. In addition, when the application of materials is in the optical field, optical constants including refractive index and extinction coefficient must also be measured, and accordingly, optical thin film analysis methods are very important.

In addition, as optical thin film analysis methods, ellipsometry (see Non-Patent Document 1), spectroscopic reflectance analysis (see Non-Patent Document 2), spectroscopic transmission analysis (see Non-Patent Document 2), and nonspectroscopic transmission analysis (see Non-Patent Document 3) are being used.

However, when the substrate of a thin film is not sufficiently thick (most thin film samples realistically fall into this category), beam reflection at the substrate back surface becomes a major problem in optical thin film analysis methods.

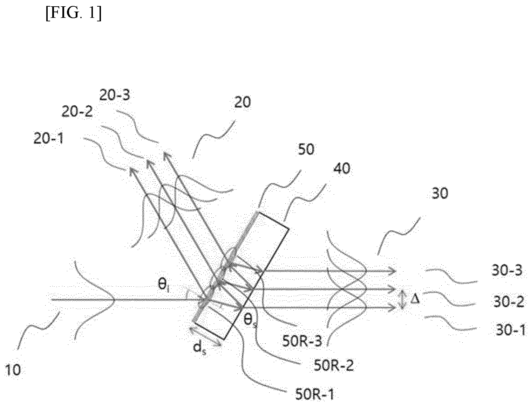

FIG. 1 shows a schematic diagram where a portion of a beam incident on a thin film 50 coated on the substrate 40 is reflected and a remaining portion is transmitted. As shown in FIG. 1, an incident beam 10 is divided into a reflected beam 20-1 and a transmitted beam at a specific region 50R-1 of the thin film 50 on the front surface of the substrate 40. Here, the transmitted beam is again divided into a reflected beam and a transmitted beam 30-1 at the back surface of the substrate 40. Here, the reflected beam is again divided into a reflected beam and a transmitted beam 20-2 at a region 50R-2 of the thin film 50 on the front surface of the substrate 40. Here, the reflected beam is again divided into a reflected beam and a transmitted beam 30-2 at the back surface of the substrate 40. Here, the reflected beam is again divided into a reflected beam and a transmitted beam 20-3 at a region 50R-3 of the thin film 50 on the front surface of the substrate 40. The reflected beam is again divided into a reflected beam and a transmitted beam 30-3 at the back surface of the substrate 40. Here, the reflected beam continues to repeat reflection at the front surface and back surface of the substrate 40. Therefore, the reflected beam 20 is composed of multiple beams such as 20-1, 20-2, 20-3, etc. and the transmitted beam 30 is composed of multiple beams such as 30-1, 30-2, 30-3, etc. The spacing $\Delta$ between the multiple beams may be expressed as $\Delta=2d_s\cos\theta_i\tan\theta_s$ (where, $\sin\theta_i=n_s\sin\theta_s$). Here, $n_s$, $d_s$, $\theta_i$, and $\theta_s$ represent the refractive index of the substrate 40, the thickness of the substrate 40, the incident angle, and the refraction angle in the substrate 40, respectively.

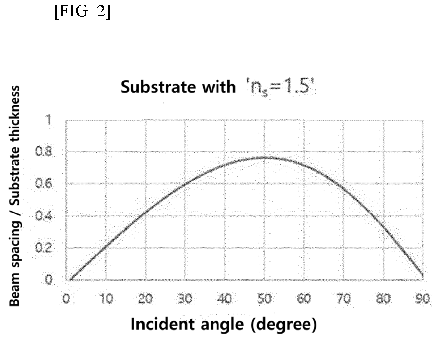

FIG. 2 shows the change of spacing of multiple beams reflected from or transmitted through the substrate 40 with the thin film 50 with respect to the incident angle of the beam on the thin film 50 on the substrate 40. FIG. 2 is for the case of a glass substrate with 'refractive index=1.5'. From FIG. 2, it may be seen that in the case of a thin glass substrate with 'refractive index=1.5, thickness=1 mm', the beam spacing has a very small value in the numerical range of 0-0.76 mm. Due to such a small beam spacing, the multiple beams reflected from or transmitted the substrate 40 with the thin film 50 spatially overlap each other, resulting in the mutual interference of the multiple beams with each other. The mutual interference of the multiple beams reflected from or transmitted through the substrate 40 with the thin film 50 causes a big problem in the analysis work of the thin film 50, making it difficult to obtain accurate measurement values. In addition, when reflection at the back surface of the substrate 40 exists, not only a specific region (region to be analyzed, 50R-1) of the thin film 50 but also other regions (50R-2, 50R-3, etc.) adjacent to the specific region 50R-1 are included in the measurement. This may lower the spatial resolution of the thin film 50 analysis. Furthermore, when the uniformity of the thin film 50 is not sufficiently good, the measurement precision may be also lowered.

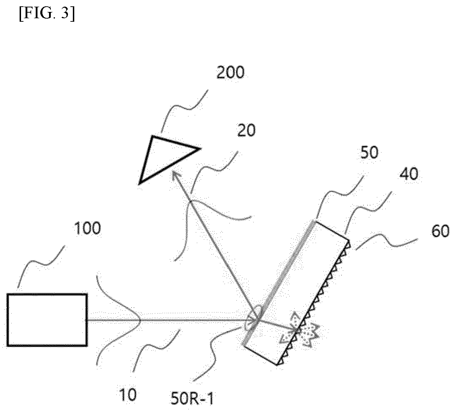

FIG. 3 shows a schematic diagram of a method for solving the problem of the substrate back surface reflection by preventing the reflection at the back surface of the substrate 40. As shown in FIG. 3, when the back surface of the substrate 40 is roughly processed to form roughness 60, the beam incident on the rough surface is scattered. Therefore, only the single beam reflected on a specific region of the thin film 50 may be included in the measurement. This method is a method that fundamentally solve the problem of the substrate back surface reflection and is mainly applied to ellipsometry or spectroscopic reflectance analysis.

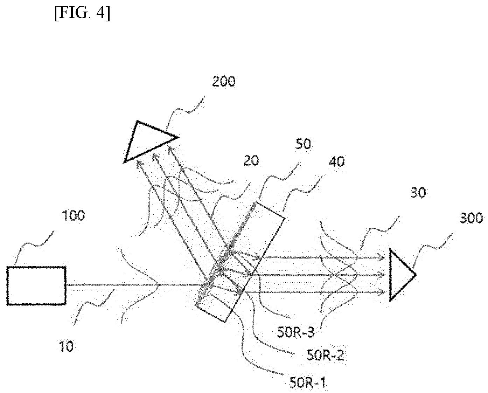

FIG. 4 shows a schematic diagram of a method for solving the problem of the substrate back surface reflection by using a spectroscopic light source 100. When a spectroscopic light source 100 is used as the light source 100, the effective coherence length of beam may be made sufficiently short to prevent mutual interference between multiple beams reflected from or transmitted through the substrate 40 with the thin film 50. In addition, by making the incident angle nearly 0° (normal

incidence) and thus the beam spacing of multiple beams nearly 0, it is possible to gather nearly together the beam-passed regions of the thin film 50, i.e. 50R-1, 50R-2, 50R-3, etc. and thus include the small unity region in the measurement. This method may be applied to spectroscopic reflectance analysis and spectroscopic transmission analysis.

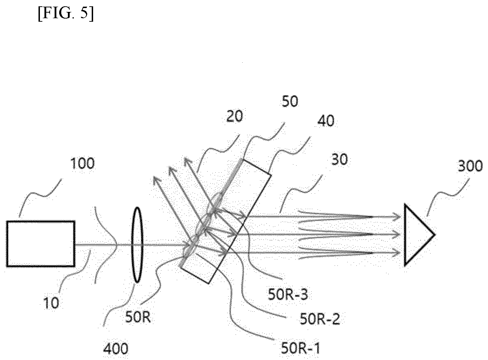

FIG. 5 shows a schematic diagram of a method for solving the problem of the substrate back surface reflection by using a multiple-beam separator. When a convex lens is positioned between the light source 100 and the thin film 50 coated on the substrate 40 and the beam incidence on the thin film 50 coated on the substrate 40 is made to be oblique, the multiple beams transmitted through the substrate 40 with the thin film 50 are spatially separated so that the mutual interference between the multiple beams may be prevented. To obtain reliable analysis results, it is generally preferable to use a light source 100 with multiple wavelengths rather than a single wavelength and to perform measurements for multiple incident angles rather than a single incident angle. However, the problem that many regions 50R-1, 50R-2, 50R-3, etc. rather than only a specific region 50R-1 of the thin film 50 are included in the measurement still remains. This method is a method to partially rather than completely solve the problem of the substrate back surface reflection. However, this method has the advantage that it may be applied to non-spectroscopic transmission analysis that has a simple analysis mechanism and thus is useful for analysis of new novel materials or unknown materials.

However, the above-described method is insufficient for analyzing thin films with improved spatial resolution and measurement precision, and further developments on this are needed.

PRIOR ART DOCUMENTS

Patent Documents

(Patent Document 1) Reference Patent Document 1: Japanese Patent Application Publication No. 2003-302334
(Patent Document 2) Reference Patent Document 2: Japanese Patent Application Publication No. 2003-506697
(Patent Document 3) Reference Patent Document 3: US Patent Application Publication No. 2004-0085537
(Patent Document 4) Reference Patent Document 4: European Patent Application Publication No. 3775835
(Patent Document 5) Reference Patent Document 5: Korean Patent Application Publication No. 2023-0109747

Non-Patent Documents

(Non-Patent Document 1) Je Hyoun Lee, Min Soo Park, Sung Mo Yang, Sang Uk Park, Min Ho Lee, Sang Youl Kim, Precise Measurement of the Ultrasmall Optical Anisotropy of Rubbed Polyimide Using an Improved Reflection Ellipsometer, Korean Journal of Optics and Photonics Vol. 26 (No. 4), 195-202 (2015) entire document
(Non-Patent Document 2) Vitaly P. Kutavichus, Valery V. Filippov, and Vitali H. Huzouski, Determination of optical parameters and thickness of weakly absorbing thin films from reflectance and transmittance spectra, Appl. Opt. 45 (19), 4547-4553 (2006) entire document
(Non-Patent Document 3) Changsoo Jung and Bum Ku Rhee, Simultaneous determination of thickness and optical constants of polymer thin film by analyzing transmittance, Appl. Opt. 41 (19), 3861-3865 (2002) entire document

## DETAILED DESCRIPTION OF INVENTION

## PROBLEMS TO BE SOLVED

The non-spectroscopic transmissive thin-film analysis method using multiple-beam separator has the significant advantage of a simple analysis mechanism resulting from the non-spectroscopy. However, it has the disadvantage of limited spatial resolution and measurement precision resulting from the problem that a wide area rather than a small specific area of the thin film is included in the measurement.

The disclosure is directed to solving the above problems, and an object thereof is to provide a non-spectroscopic transmissive thin-film analysis apparatus and an analysis method thereof that simultaneously measure thickness and optical constants (refractive index, extinction coefficient) of a thin film with improved spatial resolution and measurement precision by solving the problem of the reflection at the substrate back surface.

## SOLUTION TO SOVE THE PROBLEMS

An optical thin film analysis apparatus not affected by substrate back surface reflection according to an

embodiment of the disclosure includes a light source emitting beam, a substrate with a thin film through which the beam emitted from the light source is transmitted, a multiple-beam separator positioned between the light source and the substrate with the thin film and spatially separating the multiple beams transmitted through the substrate with the thin film, a beam-spacing expander expanding spacing of the multiple beams transmitted through the substrate with the thin film, a beam filter passing one beam of the multiple beams whose spacing is expanded by the beam-spacing expander and blocking the other beams, a beam-deviation compensator compensating for deviation of the beam passed by the beam filter, and a photodetector receiving the beam whose deviation is compensated for by the beam-deviation compensator.

A method of optical thin film analysis not affected by substrate back surface reflection according to an embodiment of the disclosure includes a first step at which beam is emitted from a light source, a second step at which the beam generated at the first step is transmitted through a multiple-beam separator, a third step at which the beam passed through the second step is transmitted through a substrate with a thin film while the multiple transmitted beams are made and spatially separated, a fourth step at which the multiple beams made at the third step are transmitted through a beam-spacing expander while the spacing of the beams is expanded, a fifth step at which the multiple beams passed through the fourth step are filtered by the beam filter while one beam of the multiple beams is passed and the other beams are blocked, a sixth step at which the beam passed through the fifth step is transmitted through a beam-deviation compensator while deviation of the beam is compensated for, and a seventh step at which the beam passed through the sixth step is received by a photodetector.

## EFFECTS OF THE INVENTION

According to the optical thin film analysis apparatus and the analysis method thereof of the disclosure, there is an effect of simultaneously measuring thickness and optical constants (refractive index, extinction coefficient) of a thin film coated on the substrate with improved spatial resolution and measurement precision by solving the problem of the reflection at the substrate back surface.

## BRIEF DESCRIPTION OF DRAWINGS

FIG. 1 shows a schematic diagram where a portion of a beam is reflected from the substrate with the thin film and the remaining portion is transmitted through the substrate with the thin film.

FIG. 2 shows the change of spacing of multiple beams reflected from or transmitted through the substrate with respect to the incident angle of beam.

FIG. 3 shows a schematic diagram of a method for solving the problem of the substrate back surface reflection by forming roughness on the back surface of the substrate to fundamentally prevent the reflection at the back surface of the substrate.

FIG. 4 shows a schematic diagram of a method for solving the problem of the substrate back surface reflection by using a spectroscopic light source to prevent mutual interference between multiple beams reflected from or transmitted through the substrate with the thin film.

FIG. 5 shows a schematic diagram of a method for solving the problem of the substrate back surface reflection by using a multiple-beam separator to prevent mutual interference of multiple beams transmitted through the substrate with the thin film.

FIG. 6 shows a schematic diagram of a method for analyzing a thin film coated on the substrate using a non-spectroscopic light source, a multiple-beam separator, a beam-spacing expander, a beam filter, and a photodetector of the disclosure.

FIG. 7A shows a schematic diagram where a beam-spacing expander of the disclosure is a prism-based beam expander, and FIG. 7B shows a schematic diagram where a beam-spacing expander of the disclosure is a lens-based beam expander.

FIG. 8 shows a schematic diagram where a beam filter of the disclosure passes only a specific beam.

FIG. 9 shows a schematic diagram of a method for analyzing a thin film coated on the substrate using a non-spectroscopic light source, a multiple-beam separator, a beam-spacing expander, a beam filter, a beam-deviation compensator, and a photodetector of the disclosure

FIG. 10 shows a schematic diagram of a method for analyzing a thin film coated on the substrate using a non-spectroscopic light source, a multiple-beam separator, a beam filter, a beam-deviation compensator, and a photodetector of the disclosure.

FIG. 11 shows a schematic diagram of a method for analyzing a thin film coated on the substrate using a non-spectroscopic light source, a multiple-beam separator, a beam filter, and a photodetector of the disclosure.

FIG. 12 shows a schematic diagram of a method for analyzing a thin film coated on the substrate using a non-

spectroscopic light source, a multiple-beam separator, a beam-deviation compensator, and a photodetector of the disclosure.

FIG. 13 shows a flow chart of a method for analyzing a thin film coated on the substrate using a non-spectroscopic light source, a multiple-beam separator, a beam-spacing expander, a beam filter, a beam-deviation compensator, and a photodetector of the disclosure.

FIG. 14 shows a flow chart of a method for analyzing a thin film coated on the substrate using a non-spectroscopic light source, a multiple-beam separator, a beam filter, a beam-deviation compensator, and a photodetector of the disclosure.

FIG. 15 shows a flow chart of a method for analyzing a thin film coated on the substrate using a non-spectroscopic light source, a multiple-beam separator, a beam-spacing expander, a beam filter, and a photodetector of the disclosure.

FIG. 16 shows a flow chart of a method for analyzing a thin film coated on the substrate using a non-spectroscopic light source, a multiple-beam separator, a beam filter, and a photodetector of the disclosure.

FIG. 17 shows a flow chart of a method for analyzing a thin film coated on the substrate using a non-spectroscopic light source, a multiple-beam separator, a beam-deviation compensator, and a photodetector of the disclosure.

## EMBODIMENTS FOR CARRYING OUT THE INVENTION

An optical thin film analysis apparatus not affected by substrate back surface reflection according to an embodiment of the disclosure will be specifically described below with reference to the drawings.

An optical thin film analysis apparatus not affected by substrate back surface reflection according to an embodiment of the disclosure includes a light source 100 emitting beam, a substrate 40 with a thin film 50 through which the beam emitted from the light source 100 is transmitted, a multiple-beam separator 400 positioned between the light source100 and the substrate 40 with the thin film 50 and spatially separating the multiple beams transmitted through the substrate 40 with the thin film 50, a beam-spacing expander 500 expanding spacing of the multiple beams transmitted through the substrate 40 with the thin film 50, a beam filter 600 passing one beam of the multiple beams whose spacing is expanded by the beam-spacing expander 500 and blocking the other beams, a beam-deviation compensator 700 compensating for deviation of the beam passed by the beam filter, and a photodetector 300 receiving the beam whose deviation is compensated for by the beam-deviation compensator 700.

An optical thin film analysis apparatus not affected by substrate back surface reflection according to an embodiment of the disclosure includes a light source 100 emitting beam, a substrate 40 with a thin film 50 through which the beam emitted from the light source 100 is transmitted, a multiple-beam separator 400 positioned between the light source100 and the substrate 40 with the thin film 50 and spatially separating the multiple beams transmitted through the substrate 40 with the thin film 50, a beam filter 600 passing one beam of the multiple beams transmitted through the substrate 40 with the thin film 50 and blocking the other beams, a beam-deviation compensator 700 compensating for deviation of the beam passed by the beam filter, and a photodetector 300 receiving the beam whose deviation is compensated for by the beam-deviation compensator 700.

An optical thin film analysis apparatus not affected by substrate back surface reflection according to an embodiment of the disclosure includes a light source 100 emitting beam, a substrate 40 with a thin film 50 through which the beam emitted from the light source 100 is transmitted, a multiple-beam separator 400 positioned between the light source100 and the substrate 40 with the thin film 50 and spatially separating the multiple beams transmitted through the substrate 40 with the thin film 50, a beam-spacing expander 500 expanding spacing of the multiple beams transmitted through the substrate 40 with the thin film 50, a beam filter 600 passing one beam of the multiple beams whose spacing is expanded by the beam-spacing expander 500 and blocking the other beams, and a photodetector 300 receiving the beam passed by the beam filter 600.

An optical thin film analysis apparatus not affected by substrate back surface reflection according to an embodiment of the disclosure includes a light source 100 emitting beam, a substrate 40 with a thin film 50 through which the beam emitted from the light source 100 is transmitted, a multiple-beam separator 400 positioned between the light source100 and the substrate 40 with the thin film 50 and spatially separating the multiple beams transmitted through the substrate 40 with the thin film 50, a beam filter 600 passing one beam of the multiple beams transmitted through the substrate 40 with a thin film 50 and blocking the other beams, and a photodetector 300 receiving the beam passed by the beam filter 600.

An optical thin film analysis apparatus not affected by substrate back surface reflection according to an embodiment of the disclosure includes a light source 100 emitting beam, a substrate 40 with a thin film 50 through which the beam emitted from the light source 100 is transmitted, a multiple-beam separator 400 positioned between the light source100 and the substrate 40 with the thin film 50 and spatially separating the multiple beams transmitted through the substrate 40 with the thin film 50, a beam-deviation compensator 700 compensating for deviation and separation of the multiple beams transmitted through the substrate 40 with the thin film 50, and a photodetector 300 receiving the beam whose deviation and separation are compensated for by the beam-deviation compensator 700.

A single-wavelength light source or a multiple-wavelength light source may be used as the light source 100.

A convex lens may be used as the multiple-beam separator 400. When a convex lens is positioned between the light source 100 and the substrate 40 with a thin film 50, the multiple beams 30-1, 30-2, 30-3, etc. transmitted through the substrate 40 with a thin film 50 are spatially separated. The focal length of the convex lens is preferably designed to be sufficiently small that the focused beam satisfies the condition of Equation 1 below at the focus.

$$\text{Beam diameter at focus } (D_{foc}) \ll \text{spacing of multiple beams } (\Delta) \quad \text{[Equation 1]}$$

In Equation 1, the beam diameter at the focus is represented as $D_{foc}=4\lambda f/(\pi D_{in})$. Here, ' $D_{foc}$: beam diameter at focus, $D_{in}$: diameter of input beam, $\lambda$: wavelength of light, and f: focal length of lens'.

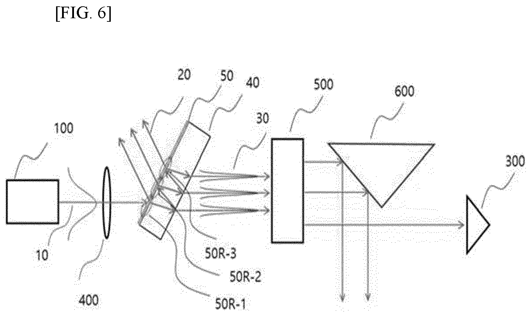

FIG. 6 shows a schematic diagram of a method for analyzing a thin film 50 coated on the substrate 40 using a non-spectroscopic light source 100, a multiple-beam separator 400, a beam-spacing expander 500, a beam filter 600, and a photodetector 300 of the disclosure. As shown in FIG. 6, when the multiple-beam separator 400 based on a convex lens is positioned between the light source 100 and the thin film 50 coated on the substrate 40 and a beam 10 emitted from the light source 100 is obliquely incident on the thin film 50 coated on the substrate 40, the multiple beams transmitted through the substrate 40 with the thin film 50 may be spatially separated, so that the mutual interference between the multiple beams may be prevented. Spacing of the multiple beams transmitted through the substrate 40 with the thin film 50 may be widened by a beam-spacing expander 500. The multiple beams whose spacing is widened by the beam spacing expander 500 may be filtered by a beam filter 600 while one beam transmitted through a specific region 50R-1 of the thin film 50 is passed and the other beams are blocked. The beam passed by the beam filter 600 may be received by the photodetector 300. This method in which only a specific region 50R-1 of the thin film 50 is included in the measurement has much better spatial resolution and measurement precision than the existing method shown in FIG. 5 in which many regions 50R-1, 50R-2, 50R-3, etc. of the thin film 50 are included in the measurement. This method is a method to completely solve the problem of the substrate back surface reflection while the existing method shown in FIG. 5 is a method to partially solve the problem.

The beam-spacing expander 500 may further widen the spacing of the multiple beams transmitted through the substrate 40 with the thin film 50. When the substrate 40 is not sufficiently thick and thus spacing of the multiple beams transmitted through the substrate 40 with the thin film 50 is not sufficiently large, the beam filter 600 may not select one beam from the multiple beams. When the substrate 40 is too thin, the beam-spacing expander 500 may be necessary.

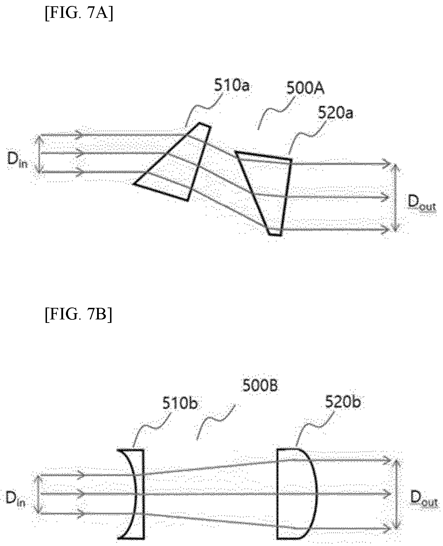

FIG. 7A shows a schematic diagram of a prism-based beam-spacing expander 500A of the disclosure and FIG. 7B shows a schematic diagram of a lens-based beam-spacing expander 500B of the disclosure. As shown in FIG. 7, a prism-based beam expander 500A (FIG. 7A) or a lens pair-based beam expander 500B (FIG. 7B) may be used as the beam-spacing expander 500. The prism-based beam expander 500A may be composed of one prism or multiple prisms. The higher the number of prisms, the higher the magnification, but the manufacturing cost increases. An anamorphic prism pair composed of two prisms 510a and 520b may be useful because the propagation direction of the exiting beam is parallel to that of the entering beam. Although the lens-based beam expander 500B may be composed of multiple lenses, a pair of a concave lens 510b and a convex lens 520b may be useful due to the simplicity. Cylindrical lenses may be more useful than general lenses because cylindrical lenses expand beams only in one direction of the horizontal and vertical directions

When a lens-pair beam expander is used as the beam-spacing expander 500, it is preferable to satisfy Equation 2 below for beam expansion.

$$\text{Focal length of concave lens } (f_{cc}) < \text{focal length of convex lens } (f_{cx}) \quad \text{[Equation 2]}$$

In addition, the lens-pair beam-spacing expander 500 preferably satisfies Equation 3 below to maintain the mutual parallelism of multiple beams.

$$\text{Distance between concave lens and convex lens } (d) = \text{focal length of convex lens } (f_{cx}) - \text{focal length of concave lens } (f_{cc}) \quad \text{[Equation 3]}$$

The prism-based beam expander of the disclosure has the advantage of having a smaller volume than the lens-based beam expander.

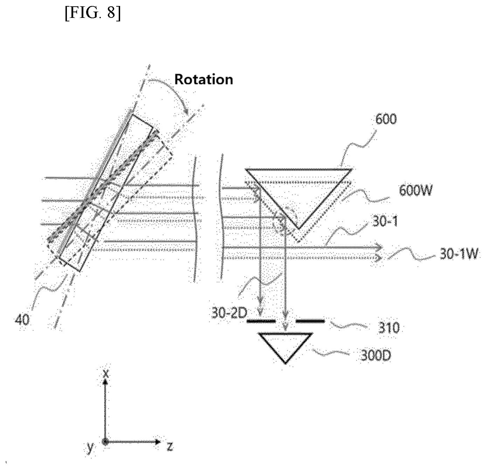

FIG. 8 shows a schematic diagram of the operational principle on which a beam filter 600 of the disclosure passes one beam of the multiple beams and blocks the other beams. A blocking screen or a mirror may be used as the beam filter

600. The blocking-screen-type beam filter 600 serves to simply screen the beams to be blocked. On the other hand, the mirror-type beam filter 600 reflects the beams to be blocked in different direction as shown in FIG. 8. A knife-edge right-angle prism mirror may be used as the mirror-type beam filter 600. The knife-edge right-angle prism mirror has a mirror surface on at least one surface of a triangle. The mirror-type beam filter 600 may be positioned to pass one beam 30-1 transmitted through a specific region 50R-1 of the thin film 50 and reflect the other beams. Therefore, only the beam 30-1 transmitted through a specific region 50R-1 of the thin film 50 may be received by the photodetector 300. The beam filter 600 is preferably positioned near the focus of the entering beams, which is a position with good spatial separation of the multiple beams. A slit or pinhole 310 may be positioned between the beam filter 600 and the side photodetector 300D to pass only one beam 30-2D of the beams reflected by the beam filter 600 into the side photodetector 300D.

In addition, when an xyz coordinate system is defined in such a way that the y and z axes are antiparallel to the rotation axis of the substrate 40 with the thin film 50 and parallel to the propagation direction of the beams entering the beam filter 600, respectively and the x axis is parallel to the cross product of the unit vectors of the y and z axes, it may be seen that as the substrate 40 with the thin film 50 is rotated about the negative y axis, the beams entering the beam filter 600 transversely change their paths to the negative x axis. Therefore, to maintain the beam filtering well, the beam filter 600 should move along the negative x axis direction in conjunction with the rotation of the substrate 40 with the thin film 50. In addition, the move of the beam filter 600 in conjunction with the rotation of the substrate 40 with the thin film 50 enables the beam 30-2D reflected by the beam filter 600 to keep well received by the side photodetector 300D. Here, the beam filter 600 may be mounted on a moving stage and controlled in a feedback manner with the side photodetector 300D.

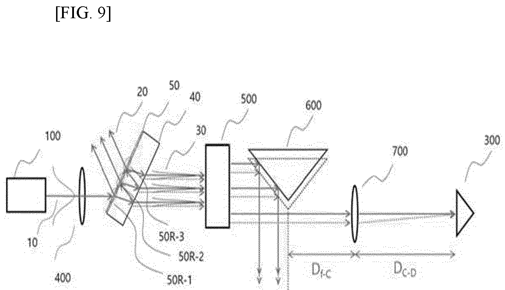

FIG. 9 shows a schematic diagram of a method for analyzing a thin film 50 coated on the substrate 40 using a non-spectroscopic light source 100, a multiple-beam separator 400, a beam-spacing expander 500, a beam filter 600, a beam-deviation compensator 700, and a photodetector 300 of the disclosure. As shown in FIG. 9, a beam-deviation compensator 700 may be used to deliver the beam passed by the beam filter 600 at a fixed position on the photodetector 300. As the substrate 40 with the thin film 50 is rotated, the beam transmitted through the substrate 40 with the thin film 50 transversely changes the path due to the refraction in the substrate 40. The deviation X of the beam from the path of the normal-incidence case is represented by Equation 4.

$$X = d_s(\sin\theta_i - \cos\theta_i \tan\theta_s) \quad \text{[Equation 4]}$$

(In Equation 4, there is a relationship $\sin\theta_i = n_s \sin\theta_s$, and $n_s$, $d_s$, $\theta_i$, $\theta_s$ represent the refractive index of the substrate 40, the thickness of the substrate 40, the incident angle, and the refraction angle in the substrate 40, respectively)

From Equation 4, it may be seen that beam deviation increases monotonically as the incident angle increases. The beam deviation by the substrate 40 with the thin film 50 is further amplified by the beam-spacing expander 500. The whole beam deviation by the substrate 40 with the thin film 50 and the beam-spacing expander 500 may greatly change the beam entrance position on the photodetector. A convex lens may be used to solve this problem. By positioning a convex lens before the photodetector 300, the beam transmitted the convex lens may be delivered at fixed position on the photodetector 300 regardless of the rotation of the substrate 40 with the thin film 50.

To compensate for beam deviation by the substrate 40 with the thin film 50 and the beam-spacing expander 500, it is preferable to satisfy Equation 5.

Distance between beam-deviation compensator 700 and photodetector 300 ($D_{C\text{-}D}$) = focal length of beam-deviation compensator 700 ($f_C$) [Equation 5]

When the distance between the focal point of the beam entering the beam-deviation compensator 700 and the position of the beam-deviation compensator 700 ($D_{f\text{-}C}$) is smaller than the focal length of the beam-deviation compensator 700 ($f_C$), re-focusing of the beam may be prevented, so the beam may be delivered on the photodetector with a desired diameter.

FIG. 9 describes that the beam-deviation compensator 700 is positioned between the beam filter 600 and the photodetector 300 to deliver the beam passed by the beam filter 600 at a fixed position on the photodetector 300 regardless of the rotation of the substrate 40 with the thin film 50. However, an additional beam-deviation compensator may be positioned between the beam filter 600 and the side photodetector 300D to deliver the beam or beams reflected by the beam filter 600 at a fixed position on the side photodetector 300D regardless of the rotation of the substrate 40 with the thin film 50.

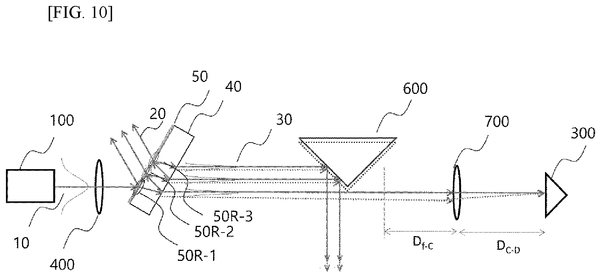

FIG. 10 shows a schematic diagram of a method for analyzing a thin film 50 coated on the substrate 40 using a non-spectroscopic light source 100, a multiple-beam separator 400, a beam filter 600, a beam-deviation compensator 700, and a photodetector 300 of the disclosure. If the substrate 40 is sufficiently thick and thus the beam spacing is sufficiently large, the beam-spacing expander 500 may not be necessarily needed. This method may be applied to the

case that the substrate 40 is sufficiently thick.

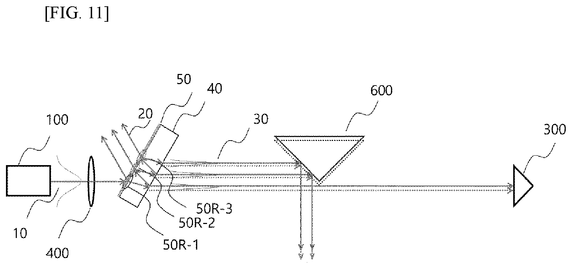

FIG. 11 shows a schematic diagram of a method for analyzing a thin film 50 coated on the substrate 40 using a non-spectroscopic light source 100, a multiple-beam separator 400, a beam filter 600, and a photodetector 300 of the disclosure. If the substrate 40 is sufficiently thick and thus the beam spacing is sufficiently large, the beam-spacing expander 500 may not be necessarily needed. In addition, if the beam receiving part of the photodetector 300 is sufficiently wide and uniform that the beam keeps delivered on the beam receiving part and converted into the electric signal with the same optical response during the measurement, the beam-deviation compensator 700 may not be necessarily needed. This method may be applied to the case that the substrate 40 is sufficiently thick and the beam receiving part of the photodetector 300 is sufficiently wide and uniform.

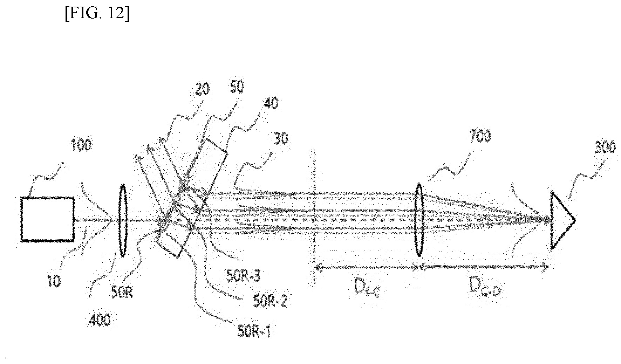

FIG. 12 shows a schematic diagram of a method for analyzing a thin film 50 coated on the substrate 40 using a non-spectroscopic light source 100, a multiple-beam separator 400, a beam-deviation compensator 700, and a photodetector 300 of the disclosure. When the multiple beams transmitted through the substrate 40 with the thin film 50 directly enter the beam-deviation compensator 700 as shown in FIG.12, the beam-deviation compensator 700 performs not only the function of compensating for deviation of the multiple beams in conjunction with the rotation of the substrate 40 with the thin film 50 but also the function of collecting the separated multiple beams at a fixed position on the photodetector 300. Therefore, the beam-deviation compensator 700 here may be called a beam deviation and separation compensator.

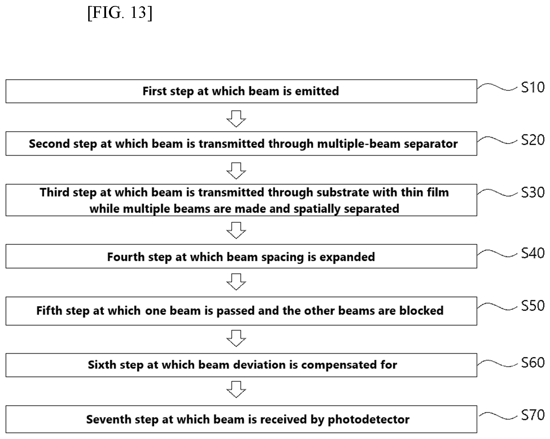

FIG. 13 shows a flow chart of a method for analyzing a thin film 50 coated on the substrate 40 using a non-spectroscopic light source 100, a multiple-beam separator 400, a beam-spacing expander 500, a beam filter 600, a beam-deviation compensator 700, and a photodetector 300 of the disclosure. As shown in FIG. 13, a method of optical thin film analysis not affected by substrate back surface reflection of a substrate 40 according to an embodiment of the disclosure includes a first step S10 at which beam is emitted from a light source 100; a second step S20 at which the beam generated at the first step S10 is transmitted through a multiple-beam separator 400; a third step S30 at which the beam passed through the second step S20 is transmitted through a substrate 40 with a thin film 50 while multiple beams are made and spatially separated; a fourth step S40 at which the multiple beams made at the third step S30 are transmitted through a beam-spacing expander 500 while the spacing of the beams is expanded; a fifth step S50 at which the multiple beams passed through the fourth step S40 are filtered by the beam filter 600 while one beam of the multiple beams is passed and the other beams is blocked; a sixth step S60 at which the beam passed through the fifth step S50 is transmitted through a beam-deviation compensator 700 while deviation of the beam is compensated for; and a seventh step S70 at which the beam passed through the sixth step S60 is received by a photodetector 300.

The first step S10 is where beam is emitted from the light source 100. A single-wavelength light source or a multiple-wavelength light source may be used as the light source 100.

The second step S20 is where the beam generated at the first step S10 is transmitted through a multiple-beam separator 400. A convex lens may be used as the multiple-beam separator 400. The beam transmitted through the multiple-beam separator 400 experiences the focusing and thus propagates while reducing the diameter, resulting into the spatial separation of the multiple beams at the third step S30.

The third step S30 is where the beam passed through the second step S20 is transmitted through a substrate 40 with a thin film 50. Due to the multiple reflection at the rear and front surfaces of the substrate 40 with the thin film 50, the beam transmitted through the substrate 40 with the thin film 50 is composed of multiple beams. The multiple beams are spatially separated due to the focusing effect by the multiple-beam separator of the second step S20.

The fourth step S40 is where the multiple beams made at the third step S30 are transmitted through the beam-spacing expander 500 while the spacing of the multiple beams is expanded. This step may be necessary in the case that the substrate 40 is too thin and thus spacing of the multiple beams transmitted through the substrate 40 with the thin film 50 is too small.

The fifth step S50 is where the multiple beams passed through the fourth step S40 are filtered by the beam filter 600 while one beam of the multiple beams is passed and the other beams are blocked. The beam passed by the beam filter 600 is the beam transmitted through only a specific region of the thin film 50 on the substrate 40 at the third step S30. This step may be necessary for including only a specific region of the thin film 50 in the measurement.

The sixth step S60 is where the beam passed through the fifth step S50 is transmitted through the beam-deviation compensator 700 while deviation of the beam is compensated for. The beam transmitted through the beam-deviation compensator 700 may be delivered at a fixed position on the photodetector 300 at the seventh step regardless of the rotation of the substrate 40 with the thin film 50.

The seventh step S70 is where the beam passed through the sixth step S60 enters the photodetector 300.

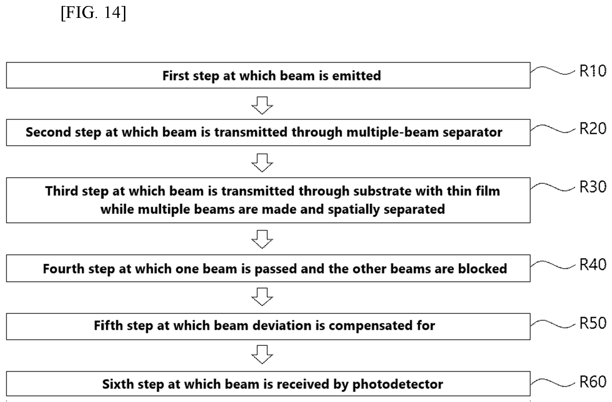

FIG. 14 shows a flow chart of a method for analyzing a thin film 50 coated on the substrate 40 using a non-spectroscopic light source 100, a multiple-beam separator 400, a beam filter 600, a beam-deviation compensator 700, and a photodetector 300 of the disclosure. As shown in FIG. 14, a method of optical thin film analysis not affected by substrate back surface reflection of a substrate 40 according to an embodiment of the disclosure includes a first step R10 at which beam is emitted from a light source 100; a second step R20 at which the beam generated at the first step R10 is transmitted through a multiple-beam separator 400; a third step R30 at which the beam passed through the second step R20 is

transmitted through a substrate 40 with a thin film 50 while multiple beams are made and spatially separated; a fourth step R40 at which the multiple beams made at the third step R30 are filtered by the beam filter 600 while one beam of the multiple beams is passed and the other beams are blocked; a fifth step R50 at which the beam passed through the fourth step R40 is transmitted through a beam-deviation compensator 700 while deviation of the beam is compensated for; and a sixth step R60 at which the beam passed through the fifth step R50 is received by a photodetector 300.

FIG. 14 is the same as the flow chart FIG. 13 of the method for analyzing a thin film 50 coated on the substrate 40 over seven steps except for excluding the fourth step S40 of FIG. 13 where the beam spacing is expanded, so detailed description is omitted.

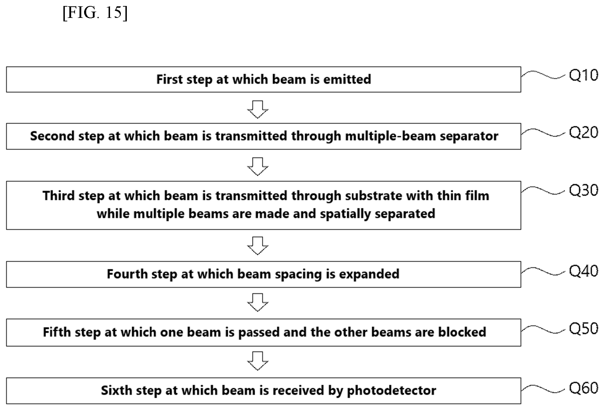

FIG. 15 shows a flow chart of a method for analyzing a thin film 50 coated on the substrate 40 using a non-spectroscopic light source 100, a multiple-beam separator 400, a beam-spacing expander 500, a beam filter 600, and a photodetector 300 of the disclosure. As shown in FIG. 15, a method of optical thin film analysis not affected by substrate back surface reflection of a substrate 40 according to an embodiment of the disclosure includes a first step Q10 at which beam is emitted from a light source 100; a second step Q20 at which the beam generated at the first step Q10 is transmitted through a multiple-beam separator 400; a third step Q30 at which the beam passed through the second step Q20 is transmitted through a substrate 40 with a thin film 50 while multiple beams are made and spatially separated; a fourth step Q40 at which the multiple beams made at the third step Q30 are transmitted through a beam-spacing expander 500 while the spacing of the beams is expanded; a fifth step Q50 at which the multiple beams passed through the fourth step Q40 are filtered by the beam filter 600 while one beam of the multiple beams is passed and the other beams are blocked; and a sixth step Q60 at which the beam passed through the fifth step Q50 is received by a photodetector 300.

FIG. 15 is the same as the flow chart FIG. 13 of the method for analyzing a thin film 50 coated on the substrate 40 over seven steps except for excluding the sixth step S60 of FIG. 13 where the beam deviation is compensated for, so detailed description is omitted.

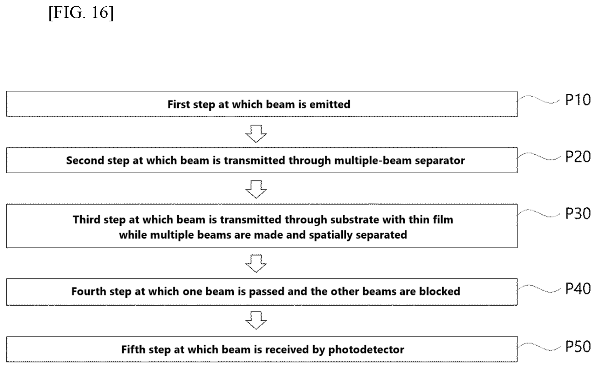

FIG. 16 shows a flow chart of a method for analyzing a thin film 50 coated on the substrate 40 using a non-spectroscopic light source 100, a multiple-beam separator 400, a beam filter 600, and a photodetector 300 of the disclosure. As shown in FIG. 16, a method of optical thin film analysis not affected by substrate back surface reflection of a substrate 40 according to an embodiment of the disclosure includes a first step P10 at which beam is emitted from a light source 100; a second step P20 at which the beam generated at the first step P10 is transmitted through a multiple-beam separator 400; a third step P30 at which the beam passed through the second step P20 is transmitted through a substrate 40 with a thin film 50 while multiple beams are made and spatially separated; a fourth step P40 at which the multiple beams made at the third step P30 are filtered by the beam filter 600 while one beam of the multiple beams is passed and the other beams are blocked; and a fifth step P50 at which the beam passed through the fourth step P40 is received by a photodetector 300.

FIG. 16 is the same as the flow chart FIG. 13 of the method for analyzing a thin film 50 coated on the substrate 40 over seven steps except for excluding the fourth step S40 of FIG. 13 where the beam spacing is expanded and the sixth step S60 of FIG. 13 where the beam deviation is compensated for, so detailed description is omitted.

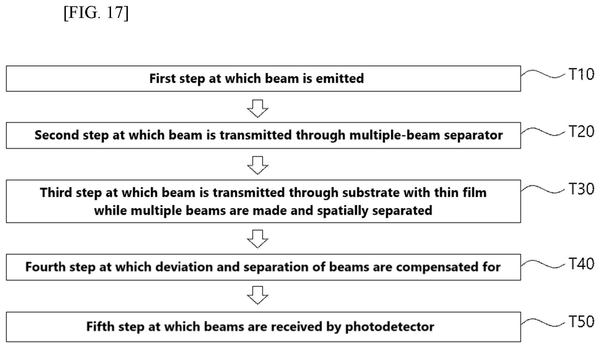

FIG. 17 shows a flow chart of a method for analyzing a thin film 50 coated on the substrate 40 using a non-spectroscopic light source 100, a multiple-beam separator 400, a beam-deviation compensator 700, and a photodetector 300 of the disclosure. As shown in FIG. 17, a method of optical thin film analysis not affected by substrate back surface reflection of a substrate 40 according to an embodiment of the disclosure includes a first step T10 at which beam is emitted from a light source 100; a second step T20 at which the beam generated at the first step T10 is transmitted through a multiple-beam separator 400; a third step T30 at which the beam passed through the second step T20 is transmitted through a substrate 40 with a thin film 50 while multiple beams are made and spatially separated; a fourth step T40 at which the multiple beams made at the third step T30 is transmitted through a beam-deviation compensator 700 while deviation and separation of the beams are compensated for; and a fifth step T50 at which the beams passed through the fourth step T40 are received by a photodetector 300.

FIG. 17 is the same as the flow chart FIG. 13 of the method for analyzing a thin film 50 coated on the substrate 40 over seven steps except for excluding the fourth step S40 of FIG. 13 where the beam spacing is expanded and the fifth step S50 of FIG. 13 where one beam is passed and the other beams are blocked, so detailed description is omitted.

Although the above-described embodiments have been described by limited embodiments and drawings, various modifications and variations are possible from the above description by those skilled in the art. For example, appropriate results may be achieved even if the described techniques are performed in a different order than the described method, and/or components of the described system, structure, apparatus, circuit, etc. are combined or combined in a different form than the described method, or replaced or substituted by other components or equivalents. Therefore, other implementations, other embodiments, and equivalents to the claims also fall within the scope of the claims described below.

## Claims

1. An optical thin film analysis apparatus not affected by substrate back surface reflection, comprising:

   a light source emitting beam;
   a substrate with a thin film through which the beam emitted from the light source is transmitted;
   a multiple-beam separator positioned between the light source and the substrate with a thin film and spatially separating the multiple beams transmitted through the substrate with a thin film;
   a beam-spacing expander expanding spacing of the multiple beams transmitted through the substrate with a thin film;
   a beam filter passing one beam of the multiple beams whose spacing is expanded by the beam-spacing expander and blocking the other beams;
   a beam-deviation compensator compensating for deviation of the beam passed by the beam filter; and
   a photodetector receiving the beam whose deviation is compensated for by the beam-deviation compensator.

2. An optical thin film analysis apparatus not affected by substrate back surface reflection, comprising:

   a light source emitting beam;
   a substrate with a thin film through which the beam emitted from the light source is transmitted;
   a multiple-beam separator positioned between the light source and the substrate with a thin film and spatially separating the multiple beams transmitted through the substrate with a thin film;
   a beam filter passing one beam of the multiple beams transmitted through the substrate with a thin film and blocking the other beams;
   a beam-deviation compensator compensating for deviation of the beam passed by the beam filter; and
   a photodetector receiving the beam whose deviation is compensated for by the beam-deviation compensator.

3. An optical thin film analysis apparatus not affected by substrate back surface reflection, comprising:

   a light source emitting beam;
   a substrate with a thin film through which the beam emitted from the light source is transmitted;
   a multiple-beam separator positioned between the light source and the substrate with a thin film and spatially separating the multiple beams transmitted through the substrate with a thin film;
   a beam-spacing expander expanding spacing of the multiple beams transmitted through the substrate with a thin film;
   a beam filter passing one beam of the multiple beams whose spacing is expanded by the beam-spacing expander and blocking the other beams; and
   a photodetector receiving the beam passed by the beam filter.

4. An optical thin film analysis apparatus not affected by substrate back surface reflection, comprising:

   a light source emitting beam;
   a substrate with a thin film through which the beam emitted from the light source is transmitted;
   a multiple-beam separator positioned between the light source and the substrate with a thin film and spatially separating the multiple beams transmitted through the substrate with a thin film;
   a beam filter passing one beam of the multiple beams transmitted through the substrate with a thin film and blocking the other beams; and
   a photodetector receiving the beam passed by the beam filter.

5. An optical thin film analysis apparatus not affected by substrate back surface reflection, comprising:

   a light source emitting beam;
   a substrate with a thin film through which the beam emitted from the light source is transmitted;
   a multiple-beam separator positioned between the light source and the substrate with a thin film and spatially separating the multiple beams transmitted through the substrate with a thin film;
   a beam-deviation compensator compensating for deviation and separation of the multiple beams transmitted through the substrate with a thin film; and
   a photodetector receiving the multiple beams whose deviation and separation are compensated for by the beam-deviation compensator.

**6.** The optical thin film analysis apparatus not affected by substrate back surface reflection of any one of claims 1 to 5, wherein the light source has a single wavelength or multiple wavelengths and has the fixed polarization of any one of s and p or the variable polarization between s and p.

**7.** The optical thin film analysis apparatus not affected by substrate back surface reflection of any one of claims 1 to 5, wherein the substrate with the thin film is placed on a rotation stage and its rotation axis is perpendicular to the plane of incidence including three beams of the beam incident on the substrate with the thin film, the beam reflected from the substrate with the thin film, and the beam transmitted through the substrate with the thin film.

**8.** The optical thin film analysis apparatus not affected by substrate back surface reflection of any one of claims 1 to 5, wherein the multiple-beam separator is a convex lens.

**9.** The optical thin film analysis apparatus not affected by substrate back surface reflection of claim 1 or 3, wherein the beam-spacing expander is a prism-based beam expander or a lens-based beam expander.

**10.** The optical thin film analysis apparatus not affected by substrate back surface reflection of any one of claims 1 to 4, wherein the beam filter is a blocking screen or a mirror.

**11.** The optical thin film analysis apparatus not affected by substrate back surface reflection of any one of claims 1, 2, and 5, wherein the beam deviation compensator is a convex lens.

**12.** A method of optical thin film analysis not affected by substrate back surface reflection, the method comprising:

a first step at which beam is emitted from a light source;
a second step at which the beam generated at the first step is transmitted through a multiple-beam separator;
a third step at which the beam passed through the second step is transmitted through a substrate with a thin film while the multiple transmitted beams are made and spatially separated;
a fourth step at which the multiple beams made at the third step are transmitted through a beam-spacing expander while the spacing of the beams is expanded;
a fifth step at which the multiple beams passed through the fourth step are filtered by the beam filter while one beam of the multiple beams is passed and the other beams are blocked;
a sixth step at which the beam passed through the fifth step is transmitted through a beam-deviation compensator while deviation of the beam is compensated for; and
a seventh step at which the beam passed through the sixth step is received by a photodetector.

**13.** A method of optical thin film analysis not affected by substrate back surface reflection, the method comprising:

a first step at which beam is emitted from a light source;
a second step at which the beam generated at the first step is transmitted through a multiple-beam separator;
a third step at which the beam passed through the second step is transmitted through a substrate with a thin film while the multiple transmitted beams are made and spatially separated;
a fourth step at which the multiple beams made at the third step are filtered by the beam filter while one beam of the multiple beams is passed and the other beams are blocked;
a fifth step at which the beam passed through the fourth step is transmitted through a beam-deviation compensator while deviation of the beam is compensated for; and
a sixth step at which the beam passed through the fifth step is received by a photodetector.

**14.** A method of optical thin film analysis not affected by substrate back surface reflection, the method comprising:

a first step at which beam is emitted from a light source;
a second step at which the beam generated at the first step is transmitted through a multiple-beam separator;
a third step at which the beam passed through the second step is transmitted through a substrate with a thin film while the multiple transmitted beams are made and spatially separated;
a fourth step at which the multiple beams made at the third step are transmitted through a beam-spacing expander while the spacing of the beams is expanded;
a fifth step at which the multiple beams passed through the fourth step are filtered by the beam filter while one beam of the multiple beams is passed and the other beams are blocked; and
a sixth step at which the beam passed through the fifth step is received by a photodetector.

**15.** A method of optical thin film analysis not affected by substrate back surface reflection, the method comprising:

a first step at which beam is emitted from a light source;
a second step at which the beam generated at the first step is transmitted through a multiple-beam separator;
a third step at which the beam passed through the second step is transmitted through a substrate with a thin film while the multiple transmitted beams are made and spatially separated;
a fourth step at which the multiple beams made at the third step are filtered by the beam filter while one beam of the multiple beams is passed and the other beams are blocked; and
a fifth step at which the beam passed through the fourth step is received by a photodetector.

**16.** A method of optical thin film analysis not affected by substrate back surface reflection, the method comprising:

a first step at which beam is emitted from a light source;
a second step at which the beam generated at the first step is transmitted through a multiple-beam separator;
a third step at which the beam passed through the second step is transmitted through a substrate with a thin film while the multiple transmitted beams are made and spatially separated;
a fourth step at which the multiple beams made at the third step is transmitted through a beam-deviation compensator while deviation and separation of the beams are compensated for; and
a fifth step at which the beams passed through the fourth step are received by a photodetector.

[FIG. 1]

20-3
20-2
20-1
20
50
40
30
θi
30-3
30-2
Δ
30-1
θs
50R-3
ds
50R-2
10
50R-1

[FIG. 2]

Substrate with 'n_s=1.5'
Beam spacing / Substrate thickness
1
0.8
0.6
0.4
0.2
0
0
10
20
30
40
50
60
70
80
90
Incident angle (degree)

[FIG. 3]

200
20
50
40
60
100
10
50R-1

[FIG. 4]

200
50
20
40
30
100
300
10
50R-3
50R-2
50R-1

[FIG. 5]

50
20
40
100
30
300
10
50R
400
50R-3
50R-2
50R-1

[FIG. 6]

20
50
40
500
600
100
30
300
10
50R-3
50R-2
400
50R-1

[FIG. 7A]

510a
500A
520a
$D_{in}$
$D_{out}$

[FIG. 7B]

500B
510b
520b
$D_{in}$
$D_{out}$

[FIG. 8]

Rotation
600
600W
30-1
30-1W
30-2D
310
300D
40
x
y
z

[FIG. 9]

20
50
40
500
600
100
30
700
300
10
50R-3
50R-2
400
50R-1
$D_{f-C}$
$D_{C-D}$

[FIG. 10]

50
40
600
20
100
30
700
300
50R-3
50R-2
10
50R-1
400
$D_{f-C}$
$D_{C-D}$

[FIG. 11]

50
40
600
20
100
30
300
50R-3
50R-2
10
50R-1
400

[FIG. 12]

20
50
40
30
700
300
100
10
400
50R
50R-3
50R-2
50R-1
$D_{f-C}$
$D_{C-D}$

[FIG. 13]

First step at which beam is emitted
S10
Second step at which beam is transmitted through multiple-beam separator
S20
Third step at which beam is transmitted through substrate with thin film while multiple beams are made and spatially separated
S30
Fourth step at which beam spacing is expanded
S40
Fifth step at which one beam is passed and the other beams are blocked
S50
Sixth step at which beam deviation is compensated for
S60
Seventh step at which beam is received by photodetector
S70

[FIG. 14]

First step at which beam is emitted — R10

Second step at which beam is transmitted through multiple-beam separator — R20

Third step at which beam is transmitted through substrate with thin film while multiple beams are made and spatially separated — R30

Fourth step at which one beam is passed and the other beams are blocked — R40

Fifth step at which beam deviation is compensated for — R50

Sixth step at which beam is received by photodetector — R60

[FIG. 15]

First step at which beam is emitted — Q10

Second step at which beam is transmitted through multiple-beam separator — Q20

Third step at which beam is transmitted through substrate with thin film while multiple beams are made and spatially separated — Q30

Fourth step at which beam spacing is expanded — Q40

Fifth step at which one beam is passed and the other beams are blocked — Q50

Sixth step at which beam is received by photodetector — Q60

[FIG. 16]

First step at which beam is emitted — P10

Second step at which beam is transmitted through multiple-beam separator — P20

Third step at which beam is transmitted through substrate with thin film while multiple beams are made and spatially separated — P30

Fourth step at which one beam is passed and the other beams are blocked — P40

Fifth step at which beam is received by photodetector — P50

[FIG. 17]

First step at which beam is emitted — T10

Second step at which beam is transmitted through multiple-beam separator — T20

Third step at which beam is transmitted through substrate with thin film while multiple beams are made and spatially separated — T30

Fourth step at which deviation and separation of beams are compensated for — T40

Fifth step at which beams are received by photodetector — T50

## INTERNATIONAL SEARCH REPORT

International application No.
**PCT/KR2024/014327**

**A. CLASSIFICATION OF SUBJECT MATTER**

**G01N 21/84**(2006.01)i; **G01B 11/06**(2006.01)i; **G01N 21/41**(2006.01)i

According to International Patent Classification (IPC) or to both national classification and IPC

**B. FIELDS SEARCHED**

Minimum documentation searched (classification system followed by classification symbols)

G01N 21/84(2006.01); G01B 11/06(2006.01); G01B 11/30(2006.01); G01N 21/21(2006.01); G01N 21/45(2006.01); G01N 21/59(2006.01); G02B 21/00(2006.01); G02B 26/10(2006.01); G02B 5/00(2006.01); G02F 1/13(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 편차 보상(compensation), 광원(beam), 박막(film), 분배기(splitter), 렌즈(lens), 거르개(filter), 프리즘(prism)

**C. DOCUMENTS CONSIDERED TO BE RELEVANT**

| Category* | Citation of document, with indication, where appropriate, of the relevant passages | Relevant to claim No. |
|---|---|---|
| A | JP 07-071924 A (HITACHI LTD.) 17 March 1995 (1995-03-17) See paragraphs [0044] and [0045] and figure 6. | 1-16 |
| A | KR 10-2002-0092231 A (KABUSHIKI KAISHA TOSHIBA) 11 December 2002 (2002-12-11) See paragraphs [0047]-[0049] and figure 2. | 1-16 |
| A | KR 10-2545092 B1 (ILLUMINA, INC.) 16 June 2023 (2023-06-16) See paragraphs [0021] and [0024] and figure 1. | 1-16 |
| A | KR 10-2019-0131161 A (SAMSUNG DISPLAY CO., LTD.) 26 November 2019 (2019-11-26) See paragraphs [0049]-[0052] and figure 3. | 1-16 |
| A | KR 10-2009-0119738 A (CANON KABUSHIKI KAISHA) 19 November 2009 (2009-11-19) See paragraphs [0013]-[0016] and figure 2. | 1-16 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2024** | **13 December 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/014327**

| Patent document cited in search report | Publication date (day/month/year) | Patent family member(s) | Publication date (day/month/year) |
|---|---|---|---|
| JP 07-071924 A | 17 March 1995 | JP 3106790 B2 | 06 November 2000 |
| KR 10-2002-0092231 A | 11 December 2002 | JP 2002-359194 A | 13 December 2002 |
| | | JP 2003-045800 A | 14 February 2003 |
| | | SG 103865 A1 | 26 May 2004 |
| | | TW I249215 B | 11 February 2006 |
| | | US 2003-0016349 A1 | 23 January 2003 |
| | | US 6975386 B2 | 13 December 2005 |
| KR 10-2545092 B1 | 16 June 2023 | AU 2018-201627 A1 | 27 September 2018 |
| | | AU 2018-201627 B2 | 16 May 2019 |
| | | BR 102018004463 A2 | 04 December 2018 |
| | | BR 102018004463 B1 | 21 September 2021 |
| | | BR 122021004250 B1 | 21 September 2021 |
| | | CA 2997777 A1 | 07 September 2018 |
| | | CA 2997777 C | 07 May 2019 |
| | | CN 108572139 A | 25 September 2018 |
| | | CN 108572139 B | 20 November 2020 |
| | | CN 112461760 A | 09 March 2021 |
| | | CN 207894810 U | 21 September 2018 |
| | | EP 3376275 A1 | 19 September 2018 |
| | | IL 257931 A | 30 April 2018 |
| | | IL 257931 B | 31 October 2019 |
| | | JP 2018-156072 A | 04 October 2018 |
| | | JP 2019-049719 A | 28 March 2019 |
| | | JP 6408730 B2 | 17 October 2018 |
| | | JP 7023819 B2 | 22 February 2022 |
| | | KR 10-2007024 B1 | 02 August 2019 |
| | | KR 10-2018-0102511 A | 17 September 2018 |
| | | KR 10-2019-0091248 A | 05 August 2019 |
| | | MY 176098 A | 24 July 2020 |
| | | NL 2018857 B1 | 09 November 2018 |
| | | NZ 740535 A | 30 August 2019 |
| | | SA 118390416 B1 | 29 March 2021 |
| | | SG 10201801798 A | 30 October 2018 |
| | | SG 10202006174 A | 29 July 2020 |
| | | TW 201833621 A | 16 September 2018 |
| | | TW 201937229 A | 16 September 2019 |
| | | TW I668469 B | 11 August 2019 |
| | | TW I721486 B | 11 March 2021 |
| | | US 10416428 B2 | 17 September 2019 |
| | | US 11143856 B2 | 12 October 2021 |
| | | US 2018-0259760 A1 | 13 September 2018 |
| | | US 2019-0369378 A1 | 05 December 2019 |
| KR 10-2019-0131161 A | 26 November 2019 | CN 110487753 A | 22 November 2019 |
| | | KR 10-2520711 B1 | 12 April 2023 |
| KR 10-2009-0119738 A | 19 November 2009 | JP 2009-276269 A | 26 November 2009 |
| | | JP 5268425 B2 | 21 August 2013 |
| | | KR 10-1045482 B1 | 30 June 2011 |
| | | US 2009-0286172 A1 | 19 November 2009 |
| | | US 7952725 B2 | 31 May 2011 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003302334 A
- JP 2003506697 A
- US 20040085537
- EP 3775835 A
- KR 20230109747


### Non-patent literature cited in the description


- **JE HYOUN LEE** ; **MIN SOO PARK** ; **SUNG MO YANG** ; **SANG UK PARK** ; **MIN HO LEE** ; **SANG YOUL KIM**. Precise Measurement of the Ultrasmall Optical Anisotropy of Rubbed Polyimide Using an Improved Reflection Ellipsometer. *Korean Journal of Optics and Photonics*, 2015, vol. 26 (4), 195-202
- **VITALY P. KUTAVICHUS** ; **VALERY V. FILIPPOV** ; **VITALI H. HUZOUSKI**. Determination of optical parameters and thickness of weakly absorbing thin films from reflectance and transmittance spectra. *Appl. Opt.*, 2006, vol. 45 (19), 4547-4553
- **CHANGSOO JUNG** ; **BUM KU RHEE**. Simultaneous determination of thickness and optical constants of polymer thin film by analyzing transmittance. *Appl. Opt.*, 2002, vol. 41 (19), 3861-3865